# EUROPÄISCHE PATENTSCHRIFT

(11) **EP 1 338 780 B1**
(45) Veröffentlichungstag und Bekanntmachung des Hinweises auf die Patenterteilung: **28.06.2006**
(21) Anmeldenummer: 03100276.9
(22) Anmeldetag: 11.02.2003
(51) Int. Cl.: F02D 41/20, F02M 51/06

(54) **Verfahren zur Steuerung einer durch einen Piezoinjektor eingespritzten Kraftstoffmenge**
Method for controlling an amount of fuel injected by piezo-electric injector
Méthode de contrôle de la quantité de carburant injecté par injecteur piezoélectrique

(30) Priorität: 19.02.2002 DE 10206906
(43) Veröffentlichungstag der Anmeldung: 27.08.2003
(73) Patentinhaber: SIEMENS AKTIENGESELLSCHAFT, 80333 München (DE)
(72) Erfinder: Ellmer, Dietmar, 93057, Regensburg (DE); Lauer, Thorsten, 93059, Regensburg (DE)

(56) Entgegenhaltungen:
- EP-A- 1 138 915
- DE-A- 10 016 476
- DE-A- 19 945 618

## Beschreibung

Die Erfindung betrifft ein Verfahren zur Steuerung einer durch einen Piezoinjektor mit einem Piezostack eingespritzten Kraftstoffmenge bei einer Brennkraftmaschine. Piezoinjektoren sind sowohl zur Einspritzung von Otto-Kraftstoffen als auch für Diesel-Kraftstoffe vorgesehen.

Bei einer direkten Einspritzung mittels Piezoinjektoren kommt es in der Injektor-Endstufe zu einem großen Streubereich hinsichtlich des Zusammenhangs zwischen Einspritzzeit und Kraftstoffmasse. Hierbei kann die tatsächlich eingespritzte Kraftstoffmasse gegenüber der Grundkennlinie, in der Einspritzzeit über Kraftstoffmasse aufgetragen ist, in extremen Fällen bis zu 50% abweichen. Eine solche Abweichung führt zu erheblichen Lambdastreuungen im gesamten Betriebsbereich, die neben einem verschlechterten Rohemissionsverhalten auch zu einem stark verschlechterten Laufverhalten, insbesondere im Schichtbetrieb führen können. Im Schichtbetrieb können Aussetzer und Rußbildung auftreten.

Es ist daher bekannt, Korrekturen für die Einspritzdauer zu bestimmen. Die ermittelte Grundeinspritzdauer wird um einen additiven Term und einen Faktor angepasst, die von einer Motorsteuerung ermittelt werden. Beim HPDI-Direkteinspritzungs-Verfahren treten durch die Korrektur der Einspritzzeit zwischen den einzelnen Zylindern stark unterschiedliche Einspritzzeiten auf, die sich ebenfalls negativ auf das Laufverhalten und die Abgasemission auswirken. Insbesondere stark unterschiedliche Einspritzzeiten der verschiedenen Injektoren bei gleicher Kraftstoffmengeneinbringung in die Zylinder führt zu einer deutlichen Verschlechterung des Einspritztimings. Eine bloße Korrektur der Einspritzdauer führt also nicht zum möglichen Optimum im Hinblick auf das Abgas- und Laufverhalten.

EP 1 138 915 A1 offenbart ein Verfahren zur Steuerung einer durch einen Piezoinjektor eingespritzten Kraftstoffmenge in einer Brennkraftmaschine. Mittels einer elektronischen Steuerung wird ein Korrekturvolumen einer Kraftstoffmenge beispielsweise basierend auf einer erfassten Motordrehzahl bestimmt und in entsprechende Einspritzzeiten des Piezoinjektors umgewandelt. Dies hat den Nachteil, dass sich zwischen den Zylindern stark abweichende Einspritzzeiten ergeben können, die den Betrieb, wie bspw. die Laufruhe, der Brennkraftmaschine beeinträchtigen.

Der Erfindung liegt die Aufgabe zugrunde, ein Verfahren zur Steuerung eines Piezoinjektors bereitzustellen, das bei größtmöglicher Laufruhe eine Änderung der Einspritzparameter vornimmt, ohne dass sich das Emissionsverhalten verschlechtert.

Die erfindungsgemäße Aufgabe wird durch ein Verfahren mit den Merkmalen aus Anspruch 1 gelöst. Vorteilhafte Ausgestaltungen des erfindungsgemäßen Verfahrens sind Gegenstand der Unteransprüche.

Das erfindungsgemäße Verfahren bezieht sich auf einen Piezoinjektor über den eine vorbestimmte Kraftstoffmenge in den Zylinder einer Brennkraftmaschine eingespritzt wird. Der Piezoinjektor ist mit einer Piezoeinrichtung versehen, die ansprechend auf eine elektrische Anregung die Freigabe einer Kraftstoffleitung auslöst. Piezoinjektoren an sich sind bereits bekannt. Bei dem erfindungsgemäßen Verfahren bestimmt eine Motorsteuerung für eine Fahrpedalstellung und weitere Betriebsparameter der Brennkraftmaschine eine Standardeinspritzzeit für die Piezoinjektoren. Bei der Standardeinspritzzeit werden je nach Brennverfahren und Applikationswunsch die bevorzugten Parameterwerte Einspritzbeginn,-ende und/oder -dauer gewählt. Für jeden Zylinder bestimmt die Motorsteuerung einen zylinderspezifischen Korrekturfaktor für Anfangs- und Endzeit der Einspritzung und/oder für die Einspritzdauer. Von den Parametern Einspritzbeginn, Einspritzende und Einspritzdauer sind jeweils zwei unabhängig voneinander, so dass der dritte nachfolgend festgelegt ist. Der zylinderspezifische Korrekturfaktor für die Parameter des Piezoinjektors wird von der Motorsteuerung nach einem an sich bekannten Verfahren berechnet. Die Korrekturfaktoren werden abhängig von einem für die Piezoeinrichtung definierten Wert einer Anregungsenergie bestimmt derart, dass der Wert der Anregungsenergie erhöht oder erniedrigt wird, um einen kleinen Korrekturfaktor zu erzielen. Der Piezoinjektor wird mit den korrigierten Werten für Anfangs- und Endzeitpunkt der Einspritzung und/oder der Einspritzdauer sowie dem geänderten Wert für die Anregungsenergie angesteuert.

Im Gegensatz zu bekannten Verfahren wird bei dem erfindungsgemäßen Verfahren berücksichtigt, dass ein Piezoinjektor mit unterschiedlicher elektrischer Anregung angesteuert werden kann. Qualitativ lässt sich festhalten, dass eine Erhöhung der elektrischen Anregung eine verstärkte Ausdehnung des Piezostacks zur Folge hat und somit zu einem vergrößerten Nadelhub führt. Als besonders vorteilhaft erweist es sich bei dem erfindungsgemäßen Verfahren, dass nahe den optimalen Betriebspunkten für das Gesamtsystem bestehend aus Injektor, Injektoransteuerung und Brennkraftmaschine gearbeitet werden kann. Hierbei berücksichtigt das erfindungsgemäße Verfahren, aufgrund der zylinderspezifischen Korrekturfaktoren bereits auftretende Toleranzen in dem Injektor und gegebenenfalls in dem Piezostack und der Piezoansteuerung, so dass jeder Zylinder in Emissions- und Drehmomentabgabe möglichst gleich ist.

Bei einer vorteilhaften Weiterführung des erfindungsgemäßen Verfahrens wird ein zylinderspezifischer Korrekturwert für die Einspritzdauer berechnet, in dieser Ausgestaltung werden also Abweichungen in der Kennlinie von eingespritzter Kraftstoffmenge zu Einspritzzeit durch Berücksichtigung der Anregungsenergie für den Piezostack ausgeglichen. Einspritzbeginn und -ende werden hierbei weiterhin von der Motorsteuerung in herkömmlicher Weise ohne einen Korrekturfaktor aufgrund der Anregungsenergie bestimmt. In dem durch das Erhöhen und das Erniedrigen der Anregungsenergie die Abweichung in der Einspritzdauer zwischen den einzelnen Zylindern gering gehalten wird, besitzt jeder der Zylinder die erforderliche Kraftstoffmenge, ohne dass die Einspritzdauer variiert wird.

In einer bevorzugten Umsetzung für die Steuerung ist die Anregungsenergie auf eine vorbestimmte Anzahl von Energieniveaus beschränkt. Es erfolgt also keine stufenlose Einstellung der elektrischen Anregung, sondern eine auf diskrete Energiewerte beschränkte Anregung.

Bevorzugt wird die Änderung des Energieniveaus für den Piezoinjektor berechnet, in dem der zylinderspezifische Korrekturwert für die Einspritzdauer durch einen vorbestimmten Faktor für eine Zeitkorrektur pro Energieniveau definiert wird und der ganzzahlige Anteil des Quotienten die Änderung des Energieniveaus angibt. Bei diesem Verfahrensschritt wird eine Änderung der Einspritzdauer so weit wie möglich durch eine Änderung des Energieniveaus kompensiert. Bevorzugt wird bei diesem Verfahrensschritt ein konstanter Faktor für die Änderung der Einspritzdauer bei dem Übergang von einem Energieniveau zum nächsten angenommen.

Da die elektrische Ansteuerung des Piezoinjektors nur innerhalb eines begrenzten Energieintervalls erfolgen kann, sind auch die diskreten Energieniveaus begrenzt. Eine Erhöhung und eine Verminderung des Energieniveaus kann nur bis zum Maximal- bzw. Minimalwert erfolgen. Ist der Maximal- oder Minimalwert des Energieniveaus erreicht, so kann eine Änderung der Einspritzdauer nicht weiter durch eine Erhöhung oder Erniedrigung des Energieniveaus kompensiert werden. Von der Motorsteuerung bestimmte zylinderspezifische Korrekturwerte werden nach Abzug der maximal möglichen Kompensation durch die Änderung des Energieniveaus an den Piezoinjektor angelegt.

Um eine zu rasche Veränderung des Energieniveaus zu vermeiden, kann eine Verzögerung bei der Änderung des Energieniveaus vorgesehen sein. Hierbei wird beispielsweise erst nach einer mehrmaligen Anforderung einer Erhöhung oder Erniedrigung des Energieniveaus dessen Wert geändert.

Eine bevorzugte Ausgestaltung des erfindungsgemäßen Verfahrens wird nachfolgend anhand eines Ausführungsbeispiels näher erläutert. Es zeigt:
- Fig. 1: ein Blockdiagramm zur Korrektur der zylinderspezifischen Einspritzzeit und des Energieniveaus nach dem erfindungsgemäßen Verfahren,
- Fig. 2: die Berechnung der zylinderspezifischen Einspritzzeit bei dem aus dem Stand der Technik bekannten Verfahren,
- Fig. 3: den schematischen Aufbau eines Piezoinjektors und
- Fig. 4: den Ablauf des erfindungsgemäßen Verfahrens mit den einzelnen dabei eingesetzten Variablen.

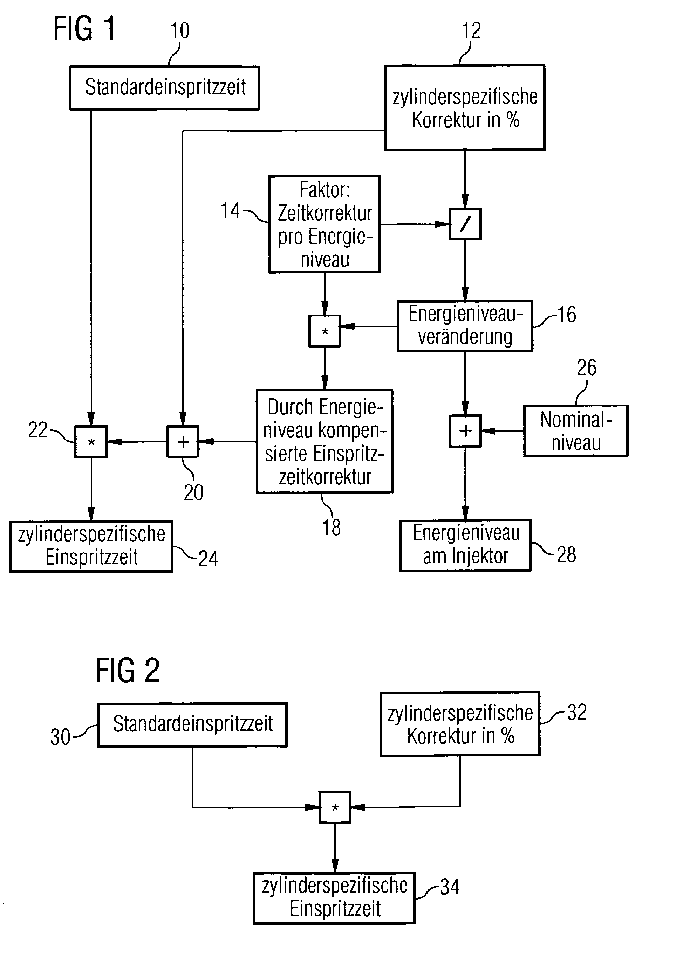

Fig. 1 geht von einer Standardeinspritzzeit 10 aus. Die Standardeinspritzzeit 10 wird beispielsweise von der Motorsteuerung abhängig von Betriebsgrößen der Brennkraftmaschine bestimmt. Zusätzlich zu der Standardeinspritzzeit 10 wird eine zylinderspezifische Korrektur 12 der Einspritzzeit bestimmt. Die Korrektur wird in dem in Fig. 1 dargestellten Beispiel als ein Korrekturfaktor bestimmt.

Bei dem erfindungsgemäßen Verfahren liegt ein vorbestimmter Faktor 14 für eine Zeitkorrektur pro Energieniveau vor. Der Quotient aus zylinderspezifischer Korrektur 12 und Zeitkorrekturfaktor pro Energieniveau 14 liefert die Anzahl der zu ändernden Energieniveaus. Ist beispielsweise der zylinderspezifische Korrekturfaktor 0,115 und der Zeitkorrekturfaktor pro Energieniveau 0,020, so ergibt sich als Quotient 5,75, was zu einer Änderung von 5 Energieniveaus führt. Der auf eine ganze Zahl gerundete Quotient wird erneut mit dem Zeitkorrekturfaktor pro Energieniveau multipliziert und ergibt die durch die Änderung der Energieniveaus kompensierte Einspritzzeitkorrektur 18. In dem oben genannten Beispiel ist die durch die Änderung des Energieniveaus kompensierte Einspritzzeitkorrektur 0,100.

Der Wert für die kompensierte Einspritzzeitkorrektur 18 wird von der zylinderspezifischen Korrektur in Schritt 20 subtrahiert und in Verfahrensschritt 22 mit der Standardeinspritzzeit multipliziert. Das Produkt ergibt die zylinderspezifische Einspritzzeit 24. In dem oben genannten Beispiel würde die Standardeinspritzzeit mit dem bedeutend kleineren Korrekturfaktor 0,015 multipliziert werden.

Die ganzzahlige Energieniveauveränderung wird zu dem Wert für das momentan vorliegende Energieniveau 26 addiert. Die Summe wird als Energieniveau 28 an den Injektor angelegt.

Bei dem erfindungsgemäßen Verfahren wird abhängig von einer Standardeinspritzzeit 10 und einer zylinderspezifischen Korrektur 12 die zylinderspezifische Einspritzzeit 24 und das Energieniveau 28 für den Injektor berechnet. Durch die Subtraktion der durch das Energieniveau kompensierten Einspritzzeitkorrektur 18 ist bei dem Verfahren die zylinderspezifische Korrektur der Einspritzzeit minimal.

Bei den bekannten Verfahren zur Bestimmung der zylinderspezifischen Einspritzzeit wird eine Standardeinspritzzeit 30, beispielsweise aus einer Sollkraftmasse und einer Druckkorrekturfunktion mit einem zylinderspezifischen Korrekturfaktor bestimmt, der beispielsweise aus einer Zylindergleichstellungsfunktion stammt, multipliziert. Das Produkt wird als zylinderspezifische Einspritzzeit verwendet. Da hierbei die berechneten zylinderspezifischen Korrekturen vollständig in eine zylinderspezifische Einspritzzeit umgesetzt werden, führt das bekannte Verfahren zu einem verschlechterten Emissions- und/oder Laufverhalten.

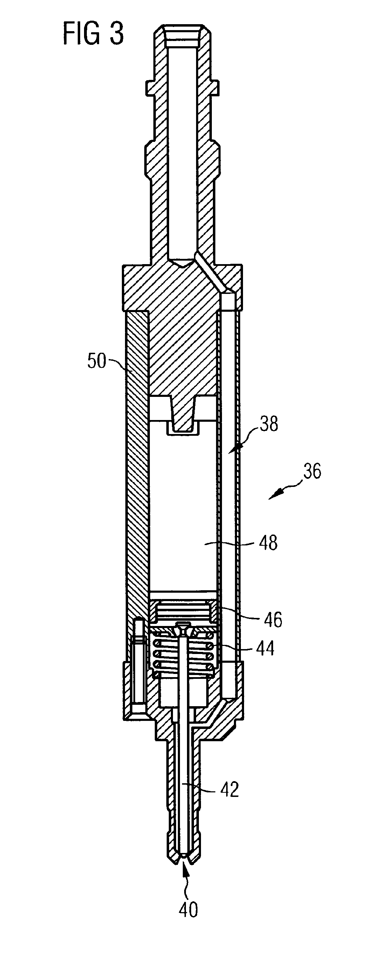

Fig. 3 zeigt beispielhaft den schematischen Aufbau eines Piezoinjektors 36. In Längsrichtung des Injektors 36 verläuft eine Kraftstoffleitung 38, die in einer Kraftstoffaustrittsöffnung 40 mündet. Die Kraftstoffaustrittsöffnung 40 ist durch eine ebenfalls in Längsrichtung verlaufende Nadel 42 verschließbar. Die Nadel 42 ist durch eine Feder 44 in die Schließposition vorgespannt. Der in dem Injektor 36 angeordnete Kopf der Nadel 40 liegt über ein scheibenförmiges Element 46 an einem Piezostack 48 an. Der Piezostack 48 liegt mit seinem von der Kraftstoffaustrittsöffnung fortweisenden Ende an einem Gegenlager 50 in dem Injektor an. Durch elektrische Anregung des Piezostack 48 dehnt dieser sich in Längsrichtung des Injektors aus und drückt die Nadel 42 entgegen der Kraft der Feder 44 in die geöffnete Position, in der Kraftstoff über die Kraftstoffleitung aus der Kraftstoffaustrittsöffnung austritt. Bei dem Piezoinjektor können zur Bestimmung der Durchflusscharakterisktik die Anregungsenergie und die Anregungsdauer bestimmt werden.

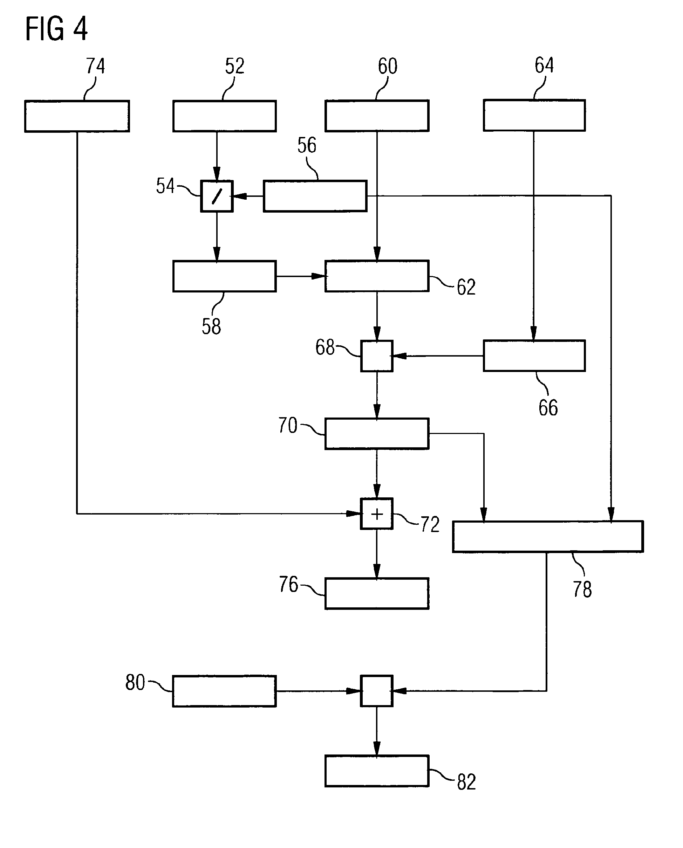

Fig. 4 zeigt ein detailliertes Ablaufdiagramm für das erfindungsgemäße Verfahren. Größe 52 bezeichnet den Faktor zur Korrektur der Einspritzzeit eines Zylinders x (TI_CYL_LAM_x). Der Faktor wird von einer sogenannten Zylinderbalancingfunktion derart bestimmt, dass z. B. eine Gleichstellung der Abgasmenge, -zusammensetzung oder des abgegebenen Drehmoments der Zylinder erreicht wird. Der Korrekturfaktor wird in Schritt 54 durch den Korrekturfaktor für die Änderung der Einspritzzeit pro Energieniveau (C_FAC_TI_EGY_LVL) dividiert. Der Quotient 16 wird als temporäre Variable gespeichert, die die zur Kompensation des Korrekturfaktors 52 TI_CLY_LAM_x notwendige Anzahl von Energieniveauänderungen angibt (TMP_DELTA_INJ_EGY_LVL). Die zur vollständigen Kompensation notwendige Anzahl der Energieniveauänderungen wird mit einem berechneten Verschiebungswert 60 verglichen. Der berechnete Verschiebungswert gibt als Schwellwert vor, ob das Energieniveau für den Piezoinjektor sich erhöht oder erniedrigt. In einem Vergleichsschritt 62 wird festgestellt, ob die Anzahl der benötigten Energieniveauänderungen kleiner als der berechnete Verschiebungswert 60 ist. In diesem Fall wird das E-nerginiveau um 1 vermindert. Ist die Änderung des Energieniveaus größer als der vorberechnete Verschiebungswert, so wird das Energieniveau um 1 erhöht. Im Gegensatz zu dem in Fig. 1 dargestellten Verfahren, wird hier bei dem Verfahren aus Fig. 4 der Energieniveauwert jeweils nur um 1 erhöht oder erniedrigt, abhängig davon, ob die sich für die vollständige Kompensation der zylinderspezifischen Korrektur berechnete Änderung des Energieniveaus oberhalb oder unterhalb des vorberechneten Schwellwerts liegt. Indem die Energieniveaus lediglich de- bzw. inkrementiert werden, werden zu große Sprünge in den Energieniveaus vermieden. Das aktuell an dem Injektor anliegende Energieniveau 64, wird in dem Verfahrensschritt 66 dahingehend überprüft, ob bereits ein Minimal- oder ein Maximalwert des Energieniveaus erreicht wurde. Guten Erfahrungen wurden mit der Verwendung von 16 Energieniveaus erzielt, jedoch können auch weniger oder deutlich mehr Energieniveaus verwendet werden.

Der Vergleichsschritt 66 führt nach dem Additionsschritt 68 zu der Änderungsgröße für das Energieniveau 70 (DELTA_INJ_EGY_LVL). In einem Additionsschritt 72 wird das Energieniveau aus dem letzten Zyklus 74 (INJ_EGY_LVL_ST_x) zu der Änderung 70 addiert, um den neuen Wert 76 für das aktuell vorliegende Energieniveau an dem Injektor 76 (INJ_EGY_CYL_x) zu bestimmten. Indem zur Bestimmung des aktuell vorliegenden Energieniveaus an dem Injektor eine separate Größe 74 vorgesehen wird, ist es möglich, für Testzwecke bestimmte Energieniveaus für den Injektor vorzugeben. Die so bestimmte Größe für das aktuelle Energieniveau 76 entspricht in dem nachfolgenden Zyklus der Größe 64 als Eingangsgröße.

Die berechnete Änderung 70 des Energieniveaus (DELTA_INJ_EGY_LVL_x) wird mit dem Korrekturfaktor 56 (C_FAC_TI_EGY_LVL) in Verfahrensschritt 78 multipliziert.

Das so bestimmte Produkt wird von dem Gesamtkorrekturfaktor (TI_CYL_LAM_x) 80 subtrahiert und ergibt so den verbleibenden Korrekturfaktor 82, der aufgrund der Diskretisierung des Energieniveaus und deren Begrenzung nicht kompensiert werden kann.

## Patentansprüche

1. Verfahren zur Steuerung einer durch einen Piezoinjektor (36) mit einer Piezoeinrichtung (48) eingespritzten Kraftstoffmenge bei einer Brennkraftmaschine, welches die folgenden Verfahrensschritte aufweist:
- eine Motorsteuerung bestimmt aus Werten für eine Fahrpedalstellung und weitere Betriebsparameter der Brennkraftmaschine eine Standardeinspritzung (10) für den Piezoinjektor (36),
- für jeden Zylinder wird mindestens ein zylinderspezifischer Korrekturfaktor (12) für Anfangs- und Endzeitpunkt der Standardeinspritzung (10) und/oder die Einspritzdauer bestimmt,
- der Korrekturfaktor (12) wird abhängig von einem für den Piezoinjektor (36) definierten Wert für seine elektrische Anregungsenergie zur Bestimmung einer Durchflusscharakteristik derart bestimmt, dass der Wert für die Anregungsenergie erhöht oder erniedrigt wird, um den Korrekturfaktor (12) zu verkleinern, und
- der Piezoinjektor (36) wird mit den korrigierten Werten für Anfangs- und Endzeitpunkt der Standardeinspritzung (10) und/oder der Einspritzdauer sowie dem geänderten Wert für die Anregungsenergie angesteuert.

2. Verfahren nach Anspruch 1, **dadurch gekennzeichnet, dass** ein zylinderspezifischer Korrekturwert für die Einspritzdauer bestimmt wird.

3. Verfahren nach Anspruch 2, **dadurch gekennzeichnet, dass** die Werte für die elektrische Anregungsenergie derart geändert werden, dass Unterschiede in der Einspritzdauer der Zylinder zueinander minimal sind.

4. Verfahren nach einem der Ansprüche 1 bis 3, **dadurch gekennzeichnet, dass** für die Anregungsenergie eine vorbestimmte Anzahl von Energieniveaus vorgesehen sind.

5. Verfahren nach Anspruch 4, **dadurch gekennzeichnet, dass** die Änderung des Energieniveaus für den Piezoinjektor (36) erfolgt, indem der zylinderspezifische Korrekturwert für die Einspritzdauer durch einen vorbestimmten Faktor für eine Zeitkorrektur pro Energieniveau dividiert wird und der ganzzahlige Anteil des Quotienten die Änderung des Energieniveaus angibt.

6. Verfahren nach Anspruch 5, **dadurch gekennzeichnet, dass** ein maximales und ein minimales Energieniveau für den Piezoinjektor (36) definiert sind und eine Änderung nur bis zu dem Maximal- und dem Minimalwert erfolgt.

7. Verfahren nach Anspruch 6, **dadurch gekennzeichnet, dass** eine Änderung des Energieniveaus erst erfolgt, wenn mehrfach eine Änderung des Energieniveaus berechnet wurde.

8. Verfahren nach Anspruch 6, **dadurch gekennzeichnet, dass** eine Änderung des Energieniveaus um ein Energieniveau erfolgt, wenn der ganzzahlige Quotient einen vorbestimmten Verschiebungswert (60) für die Energieniveaus über- bzw. unterschreitet.

## Claims

1. Method for controlling a fuel amount injected in an internal combustion engine by means of a piezoelectric injector (36) having a piezoelectric device (48), comprising the following method steps:
- an engine control unit specifies a standard injection (10) for the piezoelectric injector (36) on the basis of values for an accelerator pedal setting and other operating parameters of the internal combustion engine,
- at least one cylinder-specific correction factor (12) per cylinder is specified for start time and end time of the standard injection (10) and/or the injection duration,
- the correction factor (12) is specified depending on a value, which value is defined for the piezoelectric injector (36) for its electrical excitation energy for specifying a flow characteristic, such that the value of the excitation energy is increased or decreased in order to make the correction factor (12) smaller, and
- the piezoelectric injector (36) is activated using the corrected values for start time and end time of the standard injection (10) and/or the injection duration, and using the changed value for the excitation energy.

2. Method according to claim 1, **characterised in that** a cylinder-specific correction value is specified for the injection duration.

3. Method according to claim 2, **characterised in that** the values for the electrical excitation energy are changed in such a way that differences in the injection durations of the cylinders relative to each other are minimal.

4. Method according to one of the claims 1 to 3, **characterised in that** a predetermined number of energy levels are provided for the excitation energy.

5. Method according to claim 4, **characterised in that** the change in the energy level for the piezoelectric injector (36) is obtained by dividing the cylinder-specific correction value for the injection duration by a predetermined factor for a time correction per energy level, wherein the whole-number part of the quotient specifies the change in the energy level.

6. Method according to claim 5, **characterised in that** a maximal and a minimal energy level are defined for the piezoelectric injector (36) and a change only occurs as far as the maximal and minimal value.

7. Method according to claim 6, **characterised in that** a change in the energy level only occurs if a change in the energy level has been calculated more than once.

8. Method according to claim 6, **characterised in that** the energy level is changed by one energy level if the whole-number quotient exceeds or falls below a predetermined shift value (60) for the energy level.

## Revendications

1. Procédé de commande d'une quantité de carburant injectée par un injecteur piézoélectrique (36) avec un dispositif piézoélectrique (48) dans un moteur à combustion interne, lequel comporte les étapes suivantes :
- une commande du moteur détermine, à partir de valeurs pour une position de la pédale d'accélérateur et d'autres paramètres de service du moteur, une injection standard (10) pour l'injecteur piézoélectrique (36),
- un facteur de correction (12) spécifique à chaque cylindre pour le moment du début et le moment de la fin de l'injection standard (10) et/ou la durée d'injection est déterminé pour chaque cylindre,
- le facteur de correction (12) est déterminé, en fonction d'une valeur définie pour l'injecteur piézoélectrique (36) pour son énergie d'excitation électrique, pour la détermination d'une caractéristique de débit, de telle sorte que la valeur pour l'énergie d'excitation est augmentée ou diminuée pour réduire le facteur de correction (12), et
- l'injecteur piézoélectrique (36) est activé avec les valeurs corrigées pour le début et la fin de l'injection standard (10) et/ou la durée d'injection, ainsi qu'avec la valeur modifiée pour l'énergie d'excitation.

2. Procédé selon la revendication 1, **caractérisé en ce qu'**une valeur de correction spécifique à chaque cylindre est déterminée pour la durée d'injection.

3. Procédé selon la revendication 2, **caractérisé en ce que** les valeurs pour l'énergie d'excitation électrique sont modifiées de manière à obtenir des différences minimales dans la durée d'injection des cylindres les uns par rapport aux autres.

4. Procédé selon l'une quelconque des revendications 1 à 3, **caractérisé en ce qu'**un nombre prédéterminé de niveaux d'énergie est prévu pour l'énergie d'excitation.

5. Procédé selon la revendication 4, **caractérisé en ce que** la variation du niveau d'énergie pour l'injecteur piézoélectrique (36) est effectuée en divisant la valeur de correction spécifique à chaque cylindre pour la durée d'injection par un facteur prédéterminé pour une correction du temps par niveau d'énergie et la part entière du quotient indique la variation du niveau d'énergie.

6. Procédé selon la revendication 5, **caractérisé en ce qu'**un niveau d'énergie maximal et un niveau d'énergie minimal sont définis pour l'injecteur piézoélectrique (36) et une variation ne peut être effectuée que jusqu'à la valeur maximale ou la valeur minimale.

7. Procédé selon la revendication 6, **caractérisé en ce qu'**une variation du niveau d'énergie est effectuée seulement lorsqu'une variation du niveau d'énergie a été calculée plusieurs fois.

8. Procédé selon la revendication 6, **caractérisé en ce que** le niveau d'énergie varie d'un niveau d'énergie lorsque le nombre entier du quotient est supérieur ou inférieur à une valeur de déplacement (60) prédéterminée pour les niveaux d'énergie.
